# EUROPÄISCHE PATENTSCHRIFT

(11) **EP 3 116 680 B1**
(45) Veröffentlichungstag und Bekanntmachung des Hinweises auf die Patenterteilung: **29.08.2018**
(21) Anmeldenummer: 15710418.3
(22) Anmeldetag: 09.03.2015
(51) Int. Cl.: B23P 11/00, F16D 1/072, B23P 9/02, F01L 1/047, F16H 53/02

(54) **VORRICHTUNG UND VERFAHREN ZUR HERSTELLUNG EINER FUNKTIONSWELLE**
DEVICE AND METHOD FOR PRODUCING A FUNCTIONAL SHAFT
DISPOSITIF ET PROCÉDÉ DE FABRICATION D'UN ARBRE FONCTIONNEL

(30) Priorität: 11.03.2014 CH 361142014
(43) Veröffentlichungstag der Anmeldung: 18.01.2017
(73) Patentinhaber: Camtec International AG, 9491 Ruggell (LI)
(72) Erfinder: BÜRGLER, Dominik, 9491 Ruggell (LI)
(74) Vertreter: Riederer Hasler & Partner Patentanwälte AG
(86) Internationale Anmeldenummer: PCT/CH2015/000037
(87) Internationale Veröffentlichungsnummer: WO 2015/135084

(56) Entgegenhaltungen:
- WO-A1-2005/066522
- CH-A- 239 582
- CN-A- 103 406 758
- DE-A1- 2 838 995
- DE-A1-102010 055 139
- JP-A- H0 768 431
- JP-A- H08 155 567
- JP-A- H08 294 832

## Beschreibung

Die Erfindung betrifft eine Vorrichtung und ein Verfahren zur Herstellung einer zusammengebauten Funktionswelle gemäss Oberbegriff der Ansprüche 1 und 11.

### Stand der Technik

Es sind Druckschriften bekannt, z.B. US2279954 oder EP0486876 A2, in denen beschrieben wird, wie eine Nabe (Funktionselement) auf einen, vor dem Fügevorgang, umgeformten Abschnitt einer Welle aufgepresst wird. Die Umformung des Wellenabschnittes kann ein Rollieren, eine Randrierung oder ein Gewindeformen oder Ähnliches sein. Beide Schriften machen keine Aussage, wie die Umformungen auf der Welle gemacht werden und welches Verfahren verwendet wird, um mehrere Naben auf mehrere rollierte Wellenabschnitte aufzupressen.

Die DE102010055139 (A1) bezieht sich auf ein Verfahren zur Montage eines mehrteiligen Gegenstandes, wobei der Gegenstand Komponenten aufweist, welche jeweils eine durchgehende Bohrung aufweisen und welche längs einer Längsachse eines Trägerelements auf vorgebbaren axialen Positionen angeordnet sind. Die Erfindung beinhaltet, dass ein Teil der Komponenten auf ein Tablett aufgebracht werden, dass für jede Komponente das Tablett derartig verschoben wird, dass sich jeweils die durchgehende Bohrung jeweils einer Komponente an einer vorgebbaren Position befindet, und dass für jede Komponente das Trägerelement senkrecht zum Tablett jeweils durch die durchgehende Bohrung derartig bewegt wird, dass die Komponente ihre vorgegebene axiale Position einnimmt. Weiterhin bezieht sich die Erfindung auf eine Montageanlage zur Umsetzung des Verfahrens und auf einen entsprechend gefertigten Gegenstand.

Die deutsche Offenlegungsschrift DE-OS-2 838 995 beschreibt ein Verfahren zum Herstellen einer Nockenwelle, bei welchem zuerst so viele axiale Nuten, wie Nocken-Phasenlagen vorhanden sind, in die Aussenoberfläche der Welle eingeschnitten werden. Die auf die Welle zu montierenden Nocken weisen an der inneren Passfläche Vorsprünge auf, die etwas grösser bezw. Weiter als die Nuten sind. Das mechanische Verfahren der Befestigung bzw. des Einpassens ist mit einem metallurgischen Verfahren gekoppelt, bei dem bspw. ein Lötmaterial, das vorher am Ende jedes Nockens vorgesehen ist, nach dem Einpassen über den Schmelzpunkt hinaus erwärmt wird, wodurch ein sehr schmaler Spalt zwischen dem Nocken und der Welle gefüllt wird. Dieses Verfahren ist sehr aufwändig und durch andere Techniken bereits überholt.

In der Hauszeitschrift "techforum Dezember 2003" der ThyssenKrupp wird auf Seite 51 beschrieben, wie eine Nocke auf eine rollierte Stelle eines Rohres aufgepresst wird. Zudem zeigt diese Veröffentlichung, wie durch eine angetriebene, rotierende Welle und dem radialem Zustellen von Rollierrollen eine Rollierung erzeugt wird.

Auch die WO2005/066522 A1 zeigt, wie eine Rollierung erzeugt wird, nämlich identisch wie in der vorerwähnten ThyssenKrupp Veröffentlichung, durch eine angetriebene, rotierende Welle und dem radialen Zustellen der Rollierrollen. Nach jeder Rollierung einer Fügestelle, muss die Welle allerdings von der Rolliermaschine in eine separate Fügemaschine eingelegt werden, damit der Nocken aufgepresst werden kann und dann wieder für die Ausführung der nächsten Rollierung in die Rolliermaschine zurücktransportiert werden.

Die CN 103 406 758 A offenbart die Merkmale der Oberbegriffe der Ansprüche 1 und 11.

Alle diese Konstruktionen sind aufwändig und in der Handhabung umständlich und kostenintensiv. So muss bei der vorgeschlagenen Lösung von ThyssenKrupp die angetriebene, rotierende Welle für die Herstellung der Rollierung nach dem Rollieren bezüglich der Winkelausrichtung in einem ersten Schritt in eine Nullstellung gebracht werden und in einem zweiten Schritt in die Winkellage, die der Nocken beim folgenden Fügevorgang benötigt. Dazu wird eine sogenannte C-Achse benötigt, die mittels eines Drehwinkelsensors und einer elektronischen Steuereinheit die notwendigen Winkeleinstellungen der Welle vornehmen kann. Diese C-Achse ist teuer, aber auch wegen der Komplexität fehleranfällig.

### Aufgabe der Erfindung

Es ist deshalb eine Aufgabe der vorliegenden Erfindung, die Nachteile des bekannten Stand der Technik zu vermeiden, insbesondere eine Vorrichtung und ein Verfahren zu schaffen, welche sich durch eine geringe Komplexität mit tiefen Investitionskosten auszeichnen und eine hohe Prozesssicherheit mit kurzen Taktzeiten aufweisen.

### Beschreibung

Erfindungsgemäss werden die vorerwähnten Ziele durch die Merkmale der Ansprüche 1 und 11 realisiert. Vorteilhafte Weiterbildungen sind in den Unteransprüchen definiert.

Die Erfindung betrifft eine Vorrichtung zur Herstellung einer Funktionswelle bestehend aus einer Welle und einer Anzahl von auf der Funktionswelle aufgebrachten Funktionselementen, die auf umgeformte Abschnitte der Welle aufgepresst sind. Die Vorrichtung besitzt einen als Rahmen ausgebildetes Maschinengestell und einem am Rahmen angeordneten, in einer axialen Richtung auf- und ab bewegbaren Pressenstempel. Der Pressenstempel besitzt endständig eine Kupplung mit einer Aufnahme einer Funktionswelle. Ein mit dem Pressenstempel in Verbindung stehender Antrieb sorgt für die axiale Bewegung des Pressenstempels. Eine Umformungsvorrichtung, insbesondere Rolliervorrichtung, dient dem Aufbringen einer den Wellendurchmesser vergrössernden Struktur, insbesondere einer Rollierung, auf dem Wellenumfang.

Die erwähnte Vorrichtung ist erfindungsgemäss dadurch gekennzeichnet, dass die Kupplung drehfest mit dem Pressenstempel verbunden und eine Umformungsvorrichtung vorgesehen ist. Ausserdem ist der Durchlass derUmformungsvorrichtung koaxial zur Längsachse des Pressenstempels angeordnet. Durch diese Merkmale ist eine sehr gute Automatisierung der Verfahrensschritte ermöglicht. Besonders vorteilhaft wirkt sich aus, dass die Funktionswelle während des ganzen Herstellprozesses am gleichen Pressenstempel angekuppelt bleiben kann. Dadurch wird letztlich eine sehr kostengünstige Herstellung von zusammengebauten Funktionswellen erreicht.

Einer der Vorteile der vorgeschlagenen Vorrichtung ist die sehr hohe Prozessfähigkeit bezüglich der Winkellage der verpressten Funktionselemente, da weder die Welle noch die zu befestigenden Funktionselemente während des Herstellprozesses zueinander verdreht werden. Zudem sind die Investitionskosten für die vorgeschlagene Anordnung tief, weil eine gesteuerte Verdrehachse (C-Achse) entfällt und weil Standardkomponenten wie Spannfutter, Lineartisch und ein NC gesteuerter Pressenstempel verwendet werden kann. Dadurch werden niedrige Herstellkosten für eine gebaute Funktionswelle erzielt. Die Umformung kann beispielsweise durch zwei radial zur Längsachse der Funktionswelle angeordnete, aufeinander zu bewegbare Umformelemente, z.B. Sickenbacken realisiert sein.

Vorteilhaft ist eine Zuführungsvorrichtung für die Funktionselemente mit einer Mehrzahl von Aufnahmen für die winkelorientierte Aufnahme der Funktionselemente vorgesehen. Dies erlaubt es, die Funktionselemente in der richtigen Winkelorientierung relativ zur Wellenlängsachse zuzuführen. Denkbar sind beispielsweise passgenaue Vertiefungen in einer Tischplatte, in welche die Funktionselemente eingelegt werden.

Zweckmässigerweise weisen die Aufnahmen Mittel auf, um die Funktionselemente winkelorientiert anzuordnen. Diese Mittel können Spannmittel sein und z.B. gefederte Kugelelemente, bewegbare Spannprismen, Negativformen der Funktionselemente oder andere zweckmässige Spannmittel aufweisen.

Mittels einer Positioniervorrichtung kann während des Betriebs der Pressenstempel und das in einer Aufnahme der Zuführungsvorrichtung aufgenommene Funktionselement (13,15) in eine koaxiale Lage gebracht werden. Dabei kann entweder der Pressenstempel oder die Zuführungsvorrichtung relativ zueinander bewegt oder verschoben werden. Als Zuführungsvorrichtung ist vorzugsweise ein Tisch, ein Lineartisch, ein Rundschaltteller oder eine Schwenkhebelvorrichtung eingesetzt.

Gemäss einer besonders vorteilhaften Ausführungsform ist die Umformungsvorrichtung in axialer Richtung des Pressenstempels ortsfest angeordnet, jedoch drehbar gelagert. Für die Rotation der Umformungsvorrichtung ist ein Antrieb vorgesehen.

Vorteilhaft ist die Umformungsvorrichtung eine Rolliervorrichtung, könnte aber auch eine Randrierungsvorrichtung oder ein Gewindeformvorrichtung sein.

Vorzugsweise hat die Rolliervorrichtung ein Spannfutter mit mehreren beweglichen Zustellbacken. An den Zustellbacken des Spannfutters kann jeweils eine frei rotierende Rollierrolle angeordnet sein. Die Rolliervorrichtung ist vorzugsweise koaxial zur Längsachse des Pressenstempels angeordnet, sodass eine zu bearbeitende Welle mittig in die Rolliervorrichtung eingebracht werden kann.

Zur Steuerung des Pressenstempels und der Positioniervorrichtung ist vorteilhaft eine Steuerung vorgesehen, die vorzugsweise in Verbindung mit Sensoren die Positionierung des Pressenstempels und der Positioniereinrichtung ermöglicht.

Gegenstand der vorliegenden Erfindung ist ein Verfahren zur Herstellung einer gebauten Funktionswelle, das dadurch gekennzeichnet ist, dass eine Welle während des Herstellprozesses drehfest gehalten und eine Umformung, vorzugsweise eine Rollierung, durch Rotation der Umformungsvorrichtung auf einen Wellenabschnitt aufgebracht wird. Das erfindungsgemässe Verfahren hat den Vorteil, dass nur 1 Achse gesteuert werden muss und die Welle während des ganzen Herstellprozesses an den Pressenstempel gekoppelt bleibt. Somit kann die Funktionswelle auf einer einzigen Vorrichtung fertiggebaut werden.

Die Vorrichtung zur Herstellung einer gebauten Nockenwelle besitzt einen vorzugsweise NC oder CNC gesteuerten Einpresszylinder, der z.B. hydraulisch oder elektromechanisch aufgebaut ist. Die Axialbewegungen des Einpresszylinders werden durch einen Pressenstempel ausgeführt. Die einzelnen Positionierwege des Pressenstempels mit den entsprechenden Beschleunigungsrampen, Verfahrgeschwindigkeiten und Verzögerungsrampen sind in einem Speicherprogramm einer Steuerung abgelegt. Der Pressenstempel weist eine Kupplungsvorrichtung auf, in die die Welle während der Herstellung drehfest, vorzugsweise mittels Kraft- und Formschluss, eingespannt ist. Die Welle und der Pressenstempel können also nur Axialbewegungen ausführen und sind gegen Rotation gesichert.

Die Vorrichtung weist ferner ein Spannfutter auf, das vorzugsweise ortsfest aber in koaxialer Lage zum Einpresszylinder angeordnet ist. Das Spannfutter wird dauernd oder intermittierend mit einem Elektromotor angetrieben. Das Spannfutter weist vorzugsweise drei Zustellbacken auf, deren Führungsbahnen je einen Winkel von 120 Grad zueinander aufweisen, also symmetrisch auf dem Spannfutter angeordnet sind. Die Zustellbacken sind je mit einer frei rotierenden Rollierrolle ausgerüstet.

Die Vorrichtung weist zudem vorzugsweise eine Nockenzuführung auf, die vorzugsweise aus Kostengründen aus einem Lineartisch besteht. In diesen Lineartisch sind die Nocken und allenfalls weitere Funktionselemente winkelorientiert und lagerichtig ortsfest angeordnet. Der Lineartisch wird durch eine Positionierachse , z.B. mit einem Kugelrollspindelantrieb, linear vor- oder rückwärts bewegt und bringt die Durchgangsbohrung der benötigten Nocke koaxial unter den Pressenstempel respektive unter die Wellenachse. Der Lineartisch wird so programmiert, dass dieser, nach einem Aufpressen eines Nockens oder Funktionselements, in eine Ausgangsposition verfährt, damit die Welle für die Herstellung der Rollierung, ungehindert wieder in das Spannfutter, einfahren kann. Nicht gezeigt ist die Ausführungsvariante der Nockenzuführung mit einem Schwenkhebel. Dieser Schwenkhebel schwenkt das aktuell benötigte Funktionselement (Nocke) in die koaxiale Lage zur Wellenachse. Nach dem Aufpressvorgang wird der Schwenkhebel in eine Ausgangsposition gefahren und kann mit einem neuen Funktionselement bestückt werden. Nicht gezeigt ist auch der Fall, dass die Positionierachse den Einpresszylinder mit der Welle bewegt, sodass wiederum die Wellachse zur Bohrung des Nockens in die koaxiale Lage gebracht wird.

Das Herstellverfahren beginnt mit dem Einspannen der Funktionswelle mit der Kupplungsvorrichtung des Einpressstempels. Die Welle kann nun nur noch axial bewegt werden und kann nicht rotieren. Im Betrieb der Vorrichtung schiebt der Einpressstempel die Welle in das rotierende Spannfutter an die entsprechende Axialposition und das rotierende Spannfutter wird durch einen ebenfalls rotierenden Hohlspannzylinder geschlossen und die Zustellbacken mit den Rollierrollen formen die gewünschte Rollierung an der gewünschten Axialposition der Welle. Die Rollierung kann beispielsweise umlaufend oder axial zur Wellenachse verlaufen. Nach der Herstellung der Rollierung werden die Zustellbacken des Spannfutters geöffnet und die Welle kann aus dem Spannfutter mittels des Pressenstempels herausgefahren werden.

Die aufzupressenden Nocken oder Funktionselemente sind schon derart für die Montage vorbereitet, dass sie auf dem Lineartisch winkelorientiert und lagerichtig ortsfest angeordnet sind. Dies kann durch nicht dargestellte Spannmittel oder durch Kavitäten für die Aufnahme der Nocken im Lineartisch realisiert werden. Der Lineartisch befindet sich zu diesem Zeitpunkt an einer seitlichen Ausgangsposition, in der der Lineartisch die Axialbewegung der Welle respektive des Einpressstempels nicht behindert. Die Welle wird nun durch den Einpressstempel in das rotierende Spannfutter in die gewünschte Axialposition eingefahren und das rotierende Spannfutter geschlossen, sodass die frei rotierenden Rollierrollen auf den Zustellbacken in das Wellenmaterial eindringen und die Rollierung nach wenigen Sekunden auf der Welle geformt ist. Anschliessend wird das rotierende Spannfutter wieder geöffnet, sodass die Welle vom Pressenstempel wieder in die obere Ausgangsposition gebracht werden kann. In einem weiteren Schritt wird nun der Lineartisch derart linear verschoben, dass die Bohrung der ersten Nocke/ des ersten Funktionselements koaxial zur Wellenachse verläuft. Der Pressenstempel bewegt nun die Welle durch die Nockenbohrung und über die rollierte Stelle der Welle. Damit erhält die Nocke oder das Funktionselement (13,15) einen festen Sitz auf der Welle. Nach dem Aufpressen des Funktionselementes wird die Welle wieder in ihre obere Ausgangsstellung gebracht und der Lineartisch verfährt wieder in eine Position, in der er die Axialbewegung der Welle respektiv des Pressenstempels nicht behindert. Die Welle wird nun wieder durch den Pressenstempel in das rotierende Spannfutter an die zweite gewünschte Axialposition eingefahren und durch das Schliessen des Spannfutters die zweite Rollierung erzeugt. Die weiteren Verfahrensschritte werden wie oben beschrieben solange wiederholt, bis alle Nocken oder Funktionselemente mit der Welle verpresst sind.

Ein Ausführungsbeispiel der Erfindung wird nun unter Bezugnahme auf die nachfolgenden Figuren näher im Detail beschrieben. Es zeigt:
- Figur 1:: Beispielhaft eine noch nicht ganz fertiggestellte Funktionswelle mit Funktionselementen in Gestalt von Nocken und einem Sensorring, sowie einer Rollierung für die Befestigung eines weiteren Funktionselements;
- Figur 2:: eine perspektivische Ansicht einer bevorzugten Ausführung einer Vorrichtung für die Herstellung einer gebauten Funktionswelle;
- Figur 3:: eine vergrösserte Darstellung des Spannfutters mit den Rollierrollen;
- Figur 4:: eine vergrösserte Darstellung eines Lineartisches mit darauf angeordneten Funktionselementen;
- Figur 5: vier Momentaufnahmen während der verschiedenen Verfahrensschritte
- Fig 5a und b: Verfahrensschritte beim Rollieren;
- Fig 5c und d: Verfahrensschritte beim Aufpressen.

In der folgenden Beschreibung der Erfindung wird als Beispiel einer zusammengebauten Funktionswelle eine gebaute Nockenwelle mit aufgepressten Nocken und weiteren aufgepressten Funktionselemente, wie z.B. Sensorringe etc. beschrieben. Die Erfindung kann aber auch für andere zusammengebaute Funktionswellen verwendet werden, wie z.B. zusammengebaute Getriebewellen mit aufgepressten Zahnrädern oder anderen Nabenformen.

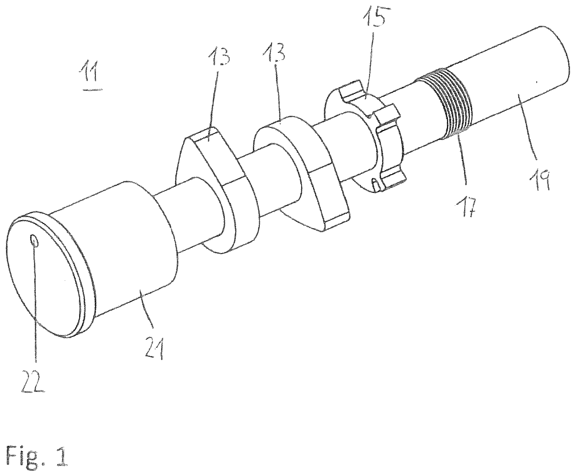

Figur 1 zeigt ein Beispiel einer noch nicht fertig gebauten Funktionswelle 11 mit drei Funktionselementen, nämlich zwei Nocken 13 und einem Sensorring 15, sowie einem rollierten Abschnitt 17. Auf den rollierten Abschnitt 17 kann noch ein viertes Funktionselement (13,15) (in Fig. 1 nicht gezeigt) aufgepresst werden. Die Funktionswelle besteht in der Regel aus einem Stahlrohr 19, auf das die Funktionselemente aufgepresst werden. Am vorderen Ende der Funktionswelle ist ein Antriebselement 21 gezeigt, das während der Herstellung zum Einspannen und für die Positionierung der Welle 11 dient. Die Positionierung der Welle 11 wird in der gezeigten Figur 1 mit der Axialbohrung 22 realisiert. Funktionswellen der gezeigten Art finden beispielsweise in Kraftfahrzeugmotoren Verwendung.

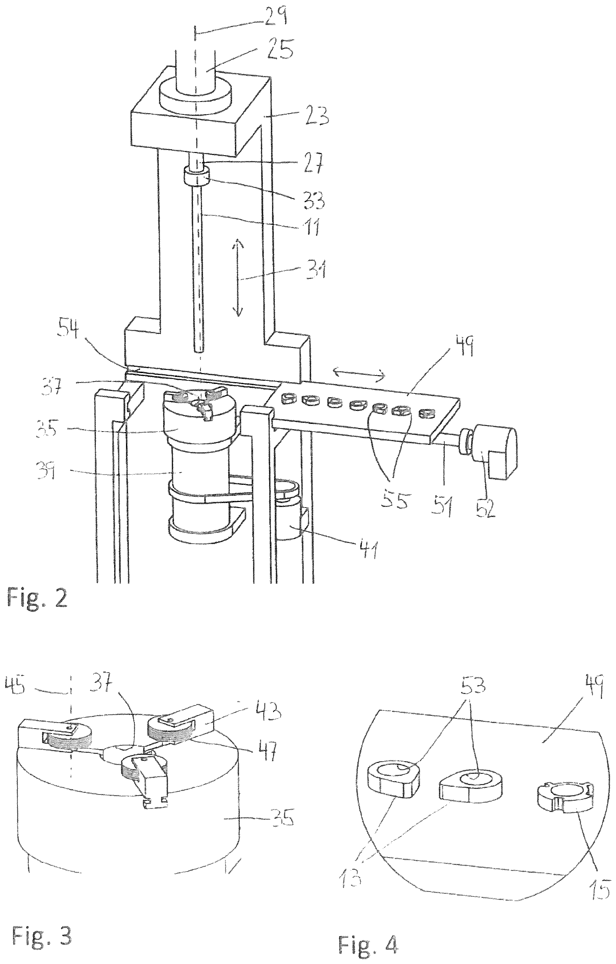

Figur 2 zeigt eine bevorzugte Ausführung der vorgeschlagenen Erfindung. An einem Pressenrahmen 23 ist ein Zylinder 25 befestigt, dessen Pressenstempel 27 programmgesteuert entlang seiner Längsachse 29 eine auf- und abgehende Linearbewegung (Pfeil 31) ausführen kann (Vertikalpresse). Nicht gezeigt ist eine mögliche Ausführungsvariante mit einer liegenden Pressenachse (Horizontalpresse). Am Pressenstempel 27 ist eine Kupplungsvorrichtung 33 angeordnet, die eine nicht näher gezeigte Aufnahme zum Ankuppeln einer Funktionswelle 11 besitzt. Von Bedeutung ist nun, dass die Kupplungsvorrichtung 33 drehfest mit Pressenstempel 27 verbunden ist. Folglich kann sich die Welle 11 nur vertikal auf und ab bewegen, d.h. dass die Welle 11, gleich wie der Pressenstempel, während des gesamten Fügeablaufs nicht verdreht werden kann und mit dem Pressenstempel 27 gekoppelt bleibt.

Am Pressenrahmen 23 ist eine Umformungsvorrichtung in Gestalt eines drehbaren Spannfutters 35 fixiert. Das Spannfutter 35 ist so angeordnet, dass die Durchgangsbohrung 37 des Spannfutters 35 und die Längsachse 29 des Pressenstempels 27, resp. die in der Kupplungsvorrichtung 33 eingespannte Welle 11 sich in koaxialer Lage befinden. Das Spannfutter 35 steht mit einer Spindel 39 in Verbindung, die durch einen Antrieb 41 in Rotation versetzt werden kann. Wie Figur 3 zeigt, ist das Spannfutter 35 vorzugsweise mit drei Zustellbacken 43 ausgerüstet, die je im Winkel von 120 Grad angeordnet sind. Die Zustellbacken 43 sind jeweils mit einer frei um eine Drehachse 45 frei rotierbaren Rollierrolle 47 bestückt. Das Schliessen und Öffnen der Zustellbacken 43 wird vorzugsweise mit einem mit der Spindel 39 rotierenden hydraulischen Spannzylinder (in den Figuren nicht gezeigt) realisiert.

Figur 2 zeigt auch eine bevorzugte Ausführung der Zuführung der Funktionselemente mittels eines Lineartisches 49 und einer gesteuerten Positionierachse 51. Ein Antrieb 52, z.B. Linearantrieb, sorgt für den Vorschub des Lineartisches 49. Der Lineartisch 49, der in einer Führungseinrichtung 54 des Rahmens 23 präzise geführt ist, wird zwischen dem Spannfutter 35 und dem Ende der Welle 11 eingeschoben, sodass eine Durchgangsöffnung 53 des gewünschten Funktionselements koaxial zu der Längsachse 29 der Welle 11 respektive koaxial zur Durchlassbohrung 37 des Spannfutters 35 zu liegen kommt. Der Lineartisch 49 besitzt eine Mehrzahl von Aufnahmen 55, z.B. in Gestalt von Vertiefungen, in denen die Funktionselemente 13,15 passgenau aufgenommen und orientiert sind.

Figur 4 zeigt, wie die Funktionselemente vorzugsweise auf dem Lineartisch 49 winkelorientiert angeordnet sind. Die winkelorientierte Anordnung der Funktionselemente kann durch geeignete Spannmittel oder z.B. durch entsprechende Formausnehmungen im Lineartisch realisiert sein.

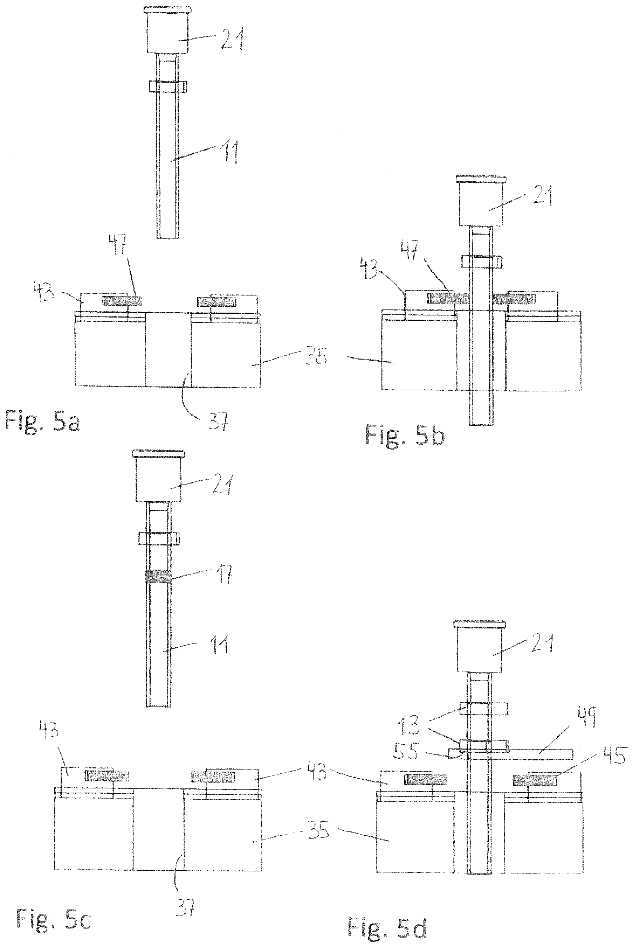

Die Figuren 5a bis d zeigen Momentaufnahmen des Herstellverfahrens einer Funktionswelle 11. In Figur 5a ist die Funktionswelle 11 in der oberen Ausgangsstellung gezeigt. Der Lineartisch 49 befindet sich ebenfalls in seiner Ausgangsstellung, sodass die Welle 11 ungehindert in die Durchlassbohrung 37 des Spannfutters 35 einfahren kann, was in Figur 5b gezeigt ist. In dieser Figur sieht man auch, wie die Zustellbacken 43 geschlossen werden und dadurch ein rollierter Abschnitt 17 auf der Welle 11 erzeugt wird. Figur 5c zeigt, dass die Zustellbacken 43 wieder geöffnet wurden und die Welle 11 wieder in die obere Ausgangslage positioniert wurde. Figur 5d zeigt wie in einem nächsten Verfahrensschritt der Lineartisch 49 zwischen dem Spannfutter 35 und der Welle 11 eingeschoben ist, in der Art, dass die Längsachse der Welle 11 und die Durchlassöffnung 53 des Funktionselementes koaxial zueinander liegen. Zudem zeigt Figur 5c, wie die Welle 11 mit dem rollierten Abschnitt in das entsprechende Funktionselement (13,15) 13 eingepresst wurde. Anschliessend fährt die Welle 11 in die obere Ausgangsstellung zurück wie in Figur 5a gezeigt. Die beschriebene Abfolge beginnt nun wieder mit der Herstellung eines neuen rollierten Abschnitts 17 an einer neuen axialen Stelle der Welle 11 für das Aufpressen eines nächsten Funktionselements 13. Diese Verfahrensschritte werden sovielmal wiederholt, bis alle Funktionselemente mit der Welle 11 verpresst sind.

### Legende

- 11: Funktionswelle
- 13: Nocken
- 15: Sensorring
- 17: rollierter Wellenabschnitt
- 19: Stahlrohr
- 21: Positionierungselement
- 22: Axialbohrung
- 23: (Pressen-)Rahmen
- 25: Zylinder
- 27: Pressenstempel
- 29: Längsachse des Pressenstempels
- 31: Linearbewegung des Pressenstempels
- 33: Kupplungsvorrichtung
- 35: Spannfutter
- 37: Durchgangsbohrung des Spannfutters
- 39: Spindel
- 41: Antrieb
- 43: Zustellbacken
- 45: Drehachse der Rollierrollen
- 47: Rollierrolle
- 49: Zuführungsvorrichtung für Funktionselemente, z.B. Linear- oder Rundetellertisch
- 51: Positionierachse
- 53: Durchgangsöffnung des Funktionselements
- 55: Aufnahmen im Tisch für die Aufnahme der Funktionselemente

## Patentansprüche

1. Vorrichtung zur Herstellung einer Funktionswelle (11) bestehend aus einer Welle und einer Anzahl von auf der Funktionswelle (11) aufgebrachten Funktionselementen (13,15), die auf umgeformte Abschnitte (17)der Welle aufgepresst sind, mit
- einem Rahmen (23),
- einem am Rahmen (23) angeordneten, in einer axialen Richtung auf- und ab bewegbaren Pressenstempel (27) mit einer Kupplung (33) für die Aufnahme einer Funktionswelle (11),
- einem Pressenstempel-Antrieb für die axiale Bewegung des Pressenstempels (27), und
- einer Umformungsvorrichtung für das Aufbringen einer den Wellendurchmesser vergrössernden Struktur auf dem Wellenumfang,
**weiter gekennzeichnet durch,**
eine mit dem Pressenstempel (27) drehfest verbundene Kupplung (33) für die Aufnahme der Funktionswelle (11), und
eine Umformungsvorrichtung mit einem Durchlass (37), der koaxial zur Längsachse (29) des Pressenstempels (27) angeordnet ist.

2. Vorrichtung nach Anspruch 1, **dadurch gekennzeichnet, dass** eine Zuführungsvorrichtung (49) für die Funktionselemente mit einer Mehrzahl von Aufnahmen (55) für die winkelorientierte Aufnahme der Funktionselemente (13,15) vorgesehen ist.

3. Vorrichtung nach Anspruch 2, **dadurch gekennzeichnet, dass** die Aufnahmen (55) Mittel aufweisen, um die Funktionselement (13,15) winkelorientiert anzuordnen.

4. Vorrichtung nach Anspruch 2 oder 3, **dadurch gekennzeichnet, dass** eine Positioniervorrichtung vorgesehen ist, um während des Betriebs den Pressenstempel (27) und das in einer Aufnahme (55) der Zuführungsvorrichtung (49) aufgenommene Funktionselement (13,15) in die koaxiale Lage zu bringen.

5. Vorrichtung nach einem der Ansprüche 2 bis 4, **dadurch gekennzeichnet, dass** die Zuführungsvorrichtung (49) ein Tisch (49), ein Lineartisch, ein Rundschaltteller oder eine Schwenkhebelvorrichtung ist.

6. Vorrichtung nach einem der Ansprüche 1 bis 5, **dadurch gekennzeichnet, dass** die Umformungsvorrichtung in axialer Richtung des Pressenstempels (27) ortsfest mit dem Rahmen (23) verbunden ist, aber drehbar gelagert ist, und einen Antrieb für die Rotation der Umformungsvorrichtung aufweist.

7. Vorrichtung nach einem der Ansprüche 1 bis 6, **dadurch gekennzeichnet, dass** die Umformungsvorrichtung eine Rolliervorrichtung ist.

8. Vorrichtung nach Anspruch 7, **dadurch gekennzeichnet, dass** die Rolliervorrichtung ein Spannfutter (35) mit mehreren beweglichen Zustellbacken (43) aufweist.

9. Vorrichtung nach Anspruch 7 oder 8, **dadurch gekennzeichnet, dass** an den Zustellbacken (43) des Spannfutters (35) jeweils eine frei rotierende Rollierrolle (47) angeordnet ist.

10. Vorrichtung nach einem der Ansprüche 1 bis 9, **dadurch gekennzeichnet, dass** eine Steuerung vorgesehen ist, um den Pressenstempel (27) in axialer Richtung zu positionieren.

11. Verfahren zur Herstellung einer gebauten Funktionswelle (11), mit dem eine Welle mit einer den Wellendurchmesser vergrössernden Struktur, nachfolgend Umformung genannt, versehen und dann auf die Umformung ein Funktionselement (13,15) aufgepresst wird,
**dadurch gekennzeichnet,**
a **dass** eine Welle während des Herstellprozesses drehfest gehalten wird,
b **dass** die Welle in axialer Richtung zu einer Umformungsvorrichtung bewegt wird, und
c **dass** dann eine Umformung auf einen Wellenabschnitt aufgebracht wird.

12. Verfahren nach Anspruch 11, **dadurch gekennzeichnet**,
d dass die Welle nach der Umformung eines Wellenabschnitts wieder in die Ausgangsposition gefahren wird,
e dass ein Funktionselement (13,15) unter der Welle positioniert und dessen Durchgangsöffnung (53) koaxial mit der Längsachse (29) der Welle (11) positioniert wird, und
f dass anschliessend die Welle in die Durchgangsöffnung (53) des positionierten Funktionselements (13,15) eingeführt und dasselbe auf die Umformung gepresst wird.

13. Verfahren nach Anspruch 11 oder 12, **dadurch gekennzeichnet, dass** die Umformung durch Rotation der Umformungsvorrichtung durchgeführt wird.

14. Verfahren nach einem der Ansprüche 11 bis 13, **dadurch gekennzeichnet, dass** die Verfahrensschritte b bis f mit unterschiedlichen Rollier- und Aufpresspositionen wiederholt werden, bis alle gewünschten Funktionselement (13,15) auf der Welle befestigt sind.

15. Verfahren nach einem der Ansprüche 11 bis 14, **dadurch gekennzeichnet, dass** zu Beginn eines Aufpressvorgangs die Durchgangsöffnung eines Funktionselements winkelorientiert und koaxial zur Längsachse der Welle angeordnet wird.

## Claims

1. Device for producing a functional shaft (11) comprising a shaft and a number of functional elements (13, 15) which are applied to the functional shaft (11) and which are pressed onto shaped portions (17) of the shaft, having
- a frame (23),
- a pressing stamp (27) which is arranged on the frame (23) and which can be moved up and down in an axial direction and which has a coupling (33) for receiving a functional shaft (11),
- a pressing stamp drive for the axial movement of the pressing stamp (27), and
- a shaping device for applying a structure which increases the shaft diameter to the shaft periphery,
further **characterised by**,
- a coupling (33) which is connected to the pressing stamp (27) in a rotationally secure manner for receiving the functional shaft (11), and
- a shaping device having a passage (37) which is arranged coaxially relative to the longitudinal axis (29) of the pressing stamp (27).

2. Device according to Claim 1, **characterised in that** a supply device (49) for the functional elements having a plurality of receiving members (55) for receiving the functional elements (13, 15) in an angle-orientated manner is provided.

3. Device according to Claim 2, **characterised in that** the receiving members (55) have means in order to arrange the functional elements (13, 15) in an angle-orientated manner.

4. Device according to Claim 2 or 3, **characterised in that** a positioning device is provided in order during operation to move the pressing stamp (27) and the functional element (13, 15) which is received in a receiving member (55) of the supply device (49) into the coaxial position.

5. Device according to any one of Claims 2 to 4, **characterised in that** the supply device (49) is a table (49), a linear table, a rotary indexing plate or a pivot lever device.

6. Device according to any one of Claims 1 to 5, **characterised in that** the shaping device is fixedly connected to the frame (23) in an axial direction of the pressing stamp (27) but is rotatably supported and has a drive for the rotation of the shaping device.

7. Device according to any one of Claims 1 to 6, **characterised in that** the shaping device is a roller burnishing device.

8. Device according to Claim 7, **characterised in that** the roller burnishing device has a clamping chuck (35) with a plurality of movable positioning jaws (43).

9. Device according to Claim 7 or 8, **characterised in that** a freely rotating roller burnishing roller (47) is arranged on the positioning jaws (43) of the clamping chuck (35) in each case.

10. Device according to any one of Claims 1 to 9, **characterised in that** a control system is provided in order to position the pressing stamp (27) in an axial direction.

11. Method for producing a constructed functional shaft (11), with which a shaft is provided with a structure which increases the shaft diameter, referred to below as shaping, and a functional element (13, 15) is then pressed onto the shaping,
**characterised in that**
a a shaft is retained in a rotationally secure manner during the production process,
b the shaft is moved in an axial direction relative to a shaping device, and
c a shaping is then applied to a shaft portion.

12. Method according to Claim 11, **characterised in that**
d the shaft after the shaping of a shaft portion is moved into the starting position again,
e **in that** a functional element (13, 15) is positioned below the shaft and the through-opening (53) thereof is positioned coaxially with respect to the longitudinal axis (29) of the shaft (11), and
f **in that** subsequently the shaft is introduced into the through-opening (53) of the positioned functional element (13, 15) and the functional element is pressed onto the shaping.

13. Method according to Claim 11 or 12, **characterised in that** the shaping is carried out by means of rotation of the shaping device.

14. Method according to any one of Claims 11 to 13, **characterised in that** the method steps b to f are repeated with different roller burnishing and pressing positions until all the desired functional elements (13, 15) are secured to the shaft.

15. Method according to any one of Claims 11 to 14, **characterised in that**, at the beginning of a pressing operation, the through-opening of a functional element is arranged in an angle-orientated manner and coaxially relative to the longitudinal axis of the shaft.

## Revendications

1. Dispositif pour la fabrication d'un arbre fonctionnel (11), constitué par un arbre et un certain nombre d'éléments fonctionnels (13, 15), appliqués sur l'arbre fonctionnel (11), qui sont pressés sur des sections déformées (17) de l'arbre, avec
- un cadre (23),
- un piston de presse (27) placé sur le cadre (23), mobile en va-et-vient dans une direction axiale, avec un accouplement (33) pour recevoir un arbre fonctionnel (11),
- un entraînement de piston de presse pour le mouvement axial du piston de presse (27) et
- un dispositif de déformation pour l'application d'une structure qui agrandit le diamètre de l'arbre sur la périphérie de l'arbre,
**caractérisé de plus par**
un accouplement (33) relié résistant à la rotation avec le piston de presse (27) pour recevoir l'arbre fonctionnel (11) et
un dispositif de transformation avec un passage (37) qui est placé coaxial avec l'axe longitudinal (29) du piston de presse (27).

2. Dispositif selon la revendication 1, **caractérisé en ce qu'**un dispositif d'alimentation (49) pour les éléments fonctionnels est prévu avec une multitude de logements (55) pour le logement à angle orienté des éléments fonctionnels (13, 15).

3. Dispositif selon la revendication 2, **caractérisé en ce que** les logements (55) présentent des moyens pour placer les éléments fonctionnels (13, 15) à angle orienté.

4. Dispositif selon la revendication 2 ou 3, **caractérisé en ce qu'**il est prévu un dispositif de positionnement pour amener le piston de presse (27) et l'élément fonctionnel (13, 15) logé dans un logement (55) du dispositif d'alimentation (49) dans la position coaxiale pendant le fonctionnement.

5. Dispositif selon l'une des revendications 2 à 4, **caractérisé en ce que** le dispositif d'alimentation (49) est une table (49), une table linéaire, un plateau circulaire de commutation ou un dispositif de levier pivotant.

6. Dispositif selon l'une des revendications 1 à 5, **caractérisé en ce que** le dispositif de déformation est relié de manière rigide mais positionnée en rotation au cadre (23) dans la direction axiale du piston de presse (27) et présente un entraînement pour la rotation du dispositif de déformation.

7. Dispositif selon l'une des revendications 1 à 6, **caractérisé en ce que** le dispositif de déformation est un dispositif de roulage.

8. Dispositif selon la revendication 7, **caractérisé en ce que** le dispositif de roulage présente un mandrin de serrage (35) avec plusieurs mâchoires de livraison mobiles (43).

9. Dispositif selon la revendication 7 ou 8, **caractérisé en ce qu'**un galet de roulage librement rotatif (47) est placé sur chacune des mâchoires de livraison (43) du mandrin de serrage (35).

10. Dispositif selon l'une des revendications 1 à 9, **caractérisé en ce qu'**une commande est prévue pour positionner le piston de presse (27) dans la direction axiale.

11. Procédé de fabrication d'un arbre fonctionnel construit (11) avec lequel un arbre est pourvu d'une structure qui agrandit le diamètre de l'arbre, ci-dessous appelée déformation, et un élément fonctionnel (13, 15) est ensuite pressé sur la déformation,
**caractérisé en ce**
a. **qu'**un arbre est maintenu résistant à la rotation pendant le processus de fabrication,
b. **que** l'arbre est déplacé dans la direction axiale vers un dispositif de déformation et
c. **qu'**une déformation est ensuite appliquée sur une section de l'arbre.

12. Procédé selon la revendication 11, caractérisé en ce
d. que l'arbre est déplacé après la déformation d'une section de l'arbre à nouveau dans la position de départ,
e. qu'un élément fonctionnel (13, 15) est positionné en dessous de l'arbre et dont l'ouverture de passage (53) est positionnée coaxiale avec l'axe longitudinal (29) de l'arbre (11) et
f. qu'ensuite l'arbre est introduit dans l'ouverture de passage (53) de l'élément fonctionnel positionné (13, 15) et que celui-ci est pressé sur la déformation.

13. Procédé selon la revendication 11 ou 12, **caractérisé en ce que** la déformation est exécutée après la rotation du dispositif de déformation.

14. Procédé selon l'une des revendications 11 à 13, **caractérisé en ce que** les étapes de procédé b à f sont répétées avec différentes positions de roulage et de pressage jusqu'à ce que tous les éléments fonctionnels souhaités (13, 15) soient fixés sur l'arbre.

15. Procédé selon l'une des revendications 11 à 14, **caractérisé en ce que** l'ouverture de passage d'un élément fonctionnel est placée, au début d'une opération de pressage, à angle orienté et de manière coaxiale par rapport à l'axe longitudinal de l'arbre.
